# EUROPEAN PATENT SPECIFICATION

(11) **EP 2 511 662 B1**
(45) Date of publication and mention of the grant of the patent: **11.06.2014**
(21) Application number: 11161867.4
(22) Date of filing: 11.04.2011
(51) Int. Cl.: G01C 21/34, G01C 21/36

(54) **Method for guiding a user of a navigation device**
Verfahren zum Leiten eines Benutzers einer Navigationsvorrichtung
Procédé pour guider un utilisateur d'un dispositif de navigation

(43) Date of publication of application: 17.10.2012
(73) Proprietor: Harman Becker Automotive Systems GmbH, 76307 Karlsbad (DE)
(72) Inventor: Hünig, Daniel, 72074, Tübingen (DE)
(74) Representative: Bertsch, Florian Oliver

(56) References cited:
- EP-A2- 0 854 352
- DE-A1-102007 061 706
- US-A- 5 243 528
- US-A- 5 311 434
- US-A1- 2005 261 829
- US-A1- 2006 111 836
- US-A1- 2007 276 596

## Description

The present invention relates to a method for guiding a user of a navigation device on a calculated route to a destination, and to a navigation device adapted to guide a user on a calculated route to a destination.

### Related Art

Navigation systems or navigation devices for guiding a user from a starting position, for example a current position of the user, to a destination position are well-known in the art. After having calculated a route from the starting position to the destination position, guidance information may be output to the user by optical and/or acoustical means. For example, a map indicating a current position of the user and a route may be displayed on a display of the navigation device. Furthermore, directional instructions may be output on the display or as acoustic information instructing the user where and when to make a turn. If the user leaves the route, the navigation device calculates a new route. This may include either a short way back to the original route or a completely new route. For example, the user may leave the calculated route for having a break or going into a restaurant or shopping or if a route block occurs. If a route block occurs, for example due to construction work or an accident, the user may take an alternative turn in contradiction to the directional instructions of the navigation device. In this case the navigation device may take the user back to the original route on a very short way. This may lead to the situation that the device takes the user back to the beginning of the route block over and over again. Further, if the user is leaving the route for a break or shopping, acoustic guiding information output by the navigation device guiding the user back to the route may be annoying.

US 5,243,528 relates to a land vehicle navigation apparatus with a visual display. The apparatus provides a visual display of a calculated navigation route with a visual indication of a direction of desired travel along the navigation route. An off-route map display portion is provided which has the visual navigation route display in one color, and in a second contrasting color, a visual display of actual vehicle travel. During a route guidance and vehicle monitoring location process, it is detected if the vehicle is off route. If an off-route condition exists, an off-route visual display is provided. The off-route visual display provides the vehicle operator an option of suspending route guidance. In that event, route guidance and vehicle tracking functions are cancelled. However, it is permitted to the vehicle operator to resume his trip when a resume trip command has been received.

DE 10 2007 061 706 A1 relates to a method for operating a navigation system in a vehicle. Guidance information guiding the user of the vehicle to a predetermined destination are output to the user. Furthermore, it is determined when the vehicle leaves the predetermined route. In this case, the routing guidance may be interrupted by a user command and may be resumed later on.

US 2006/0111836 A1 relates to a navigation guidance cancellation apparatus. Navigation instructions determined by a navigation controller may be displayed on a graphical user interface. Travel instructions by voice output may also notify an operator of a re-route instruction. After a predetermined number of non-executed re-route instructions, a dialogue box is displayed on a display. The dialogue box includes a button for cancelling guidance, a button for suspending guidance, a button for changing route, and a button for continuing guidance. When the suspense guidance button is selected, the navigation controller may continue monitoring and determining the current position of the vehicle in relation to the travel route while suspending determination and display of re-route instructions or guidance instructions corresponding to the travel route.

US 2007/0276596 A1 relates to a route guidance system. At the start of a journey or in the event that a vehicle deviates from the prescribed optimal route, the normal display is changed to a "compass" type display comprising an arrow-shaped indicator (the compass arrow) of the direction of travel. The compass aid function has two modes of operation, namely manual and automatic rerouting modes. In the automatic rerouting mode, once the in-vehicle device detects that the user has driven off a prescribed route, the in-vehicle device initiates a silent call to a central route advisory system without alerting the user. If, during the call, the in-vehicle device detects that the user has regained the prescribed route, the silent call is terminated without making the user aware of the activities of the in-vehicle device. However, if the in-vehicle device detects that the user has not regained the prescribed route, it issues a beep to warn the user and a new route is calculated based on the current position of the vehicle.

Therefore, there is a need for an improved guiding of a user of a navigation device.

### Summary of the Invention

This object is achieved by a method for guiding a user of a navigation device on a calculated route to a destination as defined in claim 1 and a navigation device as defined in claim 12. The dependent claims define preferred and advantageous embodiments of the invention.

According to the present invention a method for guiding a user of a navigation device on a calculated route to a destination is provided. Guidance information is output to the user to guide the user along the calculated route. According to the method, based on a current position of the navigation device, it is determined if the user has left the calculated route. If the user has left the calculated route, the user is asked whether a guidance by the navigation device should be interrupted or not. If the user confirms that the guidance by the navigation device should be interrupted, an output of guidance information to the user is inhibited for a predetermined time period, for example for a few minutes, for example for 5 minutes.

If the user leaves the calculated route for example for driving to a sightseeing point, for making a break at a gas station or a restaurant, for detouring a blocking of the road ahead due to a congestion, an accident or a construction, or for detouring from the calculated route to make stop at a well-known address, the output of guidance information is inhibited for a predetermined time and the user is not annoyed by the navigation device outputting guidance information. This may increase the comfort when using the navigation device.

According to the method, a route to the destination is calculated during the predetermined time period during which the output of guidance information to the user is inhibited. Based on the calculated route an estimated arrival time at the destination is calculated and the estimated arrival time is displayed on a display of the navigation device. Thus, although during the predetermined time period no guidance information is output to the user, the estimated arrival time at the destination is still displayed. Assuming that the user wishes to continue to drive to the destination although the user has left the calculated route for certain reasons as explained above, the user may still be informed about the estimated arrival time at the destination. Furthermore, when a command from the user to terminate inhibiting the output of guidance information is received or the time period for inhibiting the output of guidance information is exceeded, guidance information may be output immediately as the route to the destination has already been calculated in the background.

According to an embodiment, the step of asking the user whether the guidance by the navigation device should be interrupted or not comprises the following steps. First, a question is output to the user asking whether the guidance by the navigation device should be interrupted or not. Then the navigation device waits for a predetermined answering time period for an answer from the user. If no answer is received within the answering time period, the navigation device determines that the guidance by the navigation device should be interrupted. If an answer is received within the answering time period, the guidance by the navigation device is interrupted or not according to the received answer. The answering time period may be for example 5 seconds. Thus, if the user does not answer within the answering time period of 5 seconds, the guidance by the navigation device is automatically interrupted and the output of guidance information to the user is inhibited for the predetermined time period. In other words, the user may answer the question, but if the user does not answer within the answering time period, it is automatically assumed that the guidance should be interrupted for the predetermined time period. This may simplify a usage of the navigation device as less user interaction is necessary.

According to a further embodiment, the method comprises additionally the following steps. First, it is determined if the predetermined time period has expired. Then, if it has been determined that the predetermined time period has expired, the user is asked whether the guidance by the navigation device should be continued or not. If the user confirms that the guidance by the navigation device should not be continued, an output of guidance information to the user is again inhibited for the predetermined time period. Thus, the output of guidance information can be easily continued or inhibited again after the predetermined time period. The predetermined time period may be configurable by the user. Furthermore, the predetermined time period may be configurable to an infinite value, and thus the output of guidance information may be reactivated by a user command only, as will be described in more detail below.

The step of asking the user whether the guidance by the navigation device should be continued or not may comprise the following steps. When the predetermined time period has expired, a question is output to the user asking whether the guidance by the navigation device should be continued or not. Then, the navigation device waits for an answer from the user for a predetermined answering time period. The answering time period may be in the range of a few seconds, for example 5 seconds. If no answer is received within the answering time period, the navigation device assumes that the guidance by the navigation device should be continued. If an answer is received from the user within the answering time period, the guidance by the navigation device is continued or not depending on the received answer. Thus, the user may easily continue the guidance or inhibit the guidance by answering the question, or the guidance may be automatically reactivated by the navigation device if the user does not answer. Thus, when the user leaves the calculated route, the output of guidance information may be inhibited automatically for a predetermined time period and after this time period automatically continued if the user does not answer to the questions from the navigation device. This may be advantageous in most use cases when the user is leaving the calculated route, for example when the user is leaving the calculated route for making a break or circumnavigating a blocked road.

According to another embodiment a route to the destination is calculated and guidance information for guiding the user along the calculated route is output if the user confirms that the guidance by the navigation device should be continued. Thus, an appropriate route to the destination and corresponding guidance information can be provided to the user.

The interaction between the navigation device and the user may comprise an output of visual and/or acoustic information and an input of haptic and/or acoustic information. For example, the questions described above may comprise a visual output on a display of the navigation device and additionally acoustic information output via a loudspeaker system of the navigation device as spoken language. The user may answer to the questions by spoken language which is received via a microphone of the navigation device or the user may actuate an input device of the navigation device, for example a control knob or a touchscreen.

The guidance information output to the user may comprise for example displaying of a map on which a current position of the user and a route to the destination are displayed. Furthermore, the guidance information may comprise driving instructions which are displayed on the display of the navigation device and which may be output as acoustic spoken language by loudspeakers of the navigation device. The driving instructions may comprise instructions like "take the next exit" or "turn left". Inhibiting the output of guidance information to the user may comprise inhibiting displaying of the calculated route on the map and inhibiting an output of these driving instructions. However, the map may still be displayed showing the current position of the vehicle but without displaying the route to the destination.

Additionally, the mode of the navigation system in which the output of guidance information is inhibited, may be activated based on a user command without departing from the calculated route. Thus, for example when the user is driving on a user-known route to a destination, the output of guidance information may be inhibited while the estimated arrival time may be displayed.

According to a further embodiment, the method comprises the following steps. When a command from the user to terminate inhibiting the output of guidance information is received, a route to the destination is calculated and corresponding guidance information for guiding the user along the calculated route is output. The command for terminating inhibiting the output of guidance information may be entered into the navigation device by spoken language from the user or by actuating an operating device of the navigation device. By terminating the mode of the navigation system in which the output of guidance information is inhibited, the user may reactivate the guidance by the navigation device on demand without entering the destination again and starting the guiding by the navigation system again.

According to a further embodiment asking the user whether a guidance by the navigation device should be interrupted or not comprises asking the user whether the route ahead is blocked or asking the user whether leaving the calculated route is intended. Based on an answer to this question a route calculation to the destination may be influenced or the predetermined time period during which the output of guidance information to the user is inhibited may be influenced.

A navigation device according to the present invention comprises a positioning unit adapted to determine a current position of the navigation device, a user interface adapted to output information to a user of the navigation device and to receive information from the user, and a processing unit. The processing unit is adapted to calculate a route to a destination and to generate and output guidance information for guiding the user along the calculated route. Based on the current position of the navigation device the processing unit determines if the user is leaving the calculated route. If the user is leaving the calculated route, the processing unit outputs a question to ask the user whether a guidance by the navigation device should be interrupted or not. If the user confirms, by inputting an answer to the question, that the guidance by the navigation device should be interrupted, the processing unit inhibits an output of guidance information to the user for a predetermined time period. Therefore, the navigation device is adapted to perform the above-described method or an embodiment of the above-described method and comprises therefore the above-described advantages.

The navigation device may comprise a mobile personal navigation device or a navigation device of a vehicle. The mobile personal navigation device may be a hand-held device which may be used inside and outside a vehicle. The navigation device of the vehicle may comprise a navigation device installed in a vehicle or may be part of an entertainment system or computer system of the vehicle.

### Brief Description of the Drawings

The invention will now be described in more detail with reference to the accompanying drawings.
Fig. 1 shows a schematic view of a navigation device according to an embodiment of the present invention.
Fig. 2 shows a flowchart comprising method steps according to an embodiment of the present invention.

### Detailed Description of Preferred Embodiments

In the following exemplary embodiments of the present invention will be described in more detail. It has to be understood that the following description is given only for the purpose of illustrating the principles of the invention and is not to be taken in a limiting sense. Rather, the scope of the invention is defined only by the appended claims and not intended to be limited by the exemplary embodiments hereinafter.

It is to be understood that the features of the various exemplary embodiments described herein may be combined with each other unless specifically noted otherwise. However, describing an embodiment with a plurality of features is not to be construed as indicating that all those features are necessary for practicing the present invention, as other embodiments may comprise less features and/or alternative features.

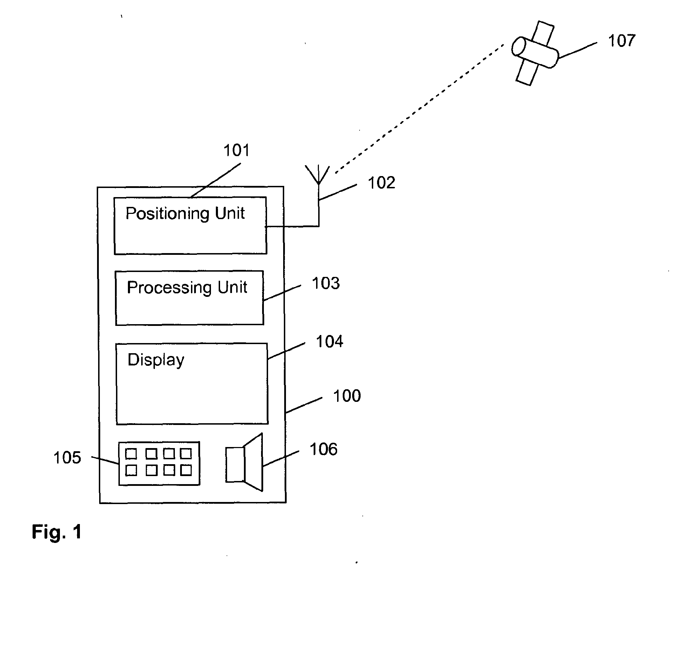

Fig. 1 shows a navigation device 100 comprising a positioning unit 101 connected to an antenna 102, a processing unit 103, a display 104, a key pad 105 and a loudspeaker 106. The display 104 may comprise a touchscreen adapted to display information to a user of the navigation device 100 and adapted to receive inputs from a user of the navigation device 100 touching operating areas displayed on the display 104. The key pad 105 may comprise any kind of operating devices, for example push buttons, control knobs or a touch-sensitive surface for receiving input information from the user. The loudspeaker 106 may be adapted to output speech information or spoken language to the user. The loudspeaker 106 may be comprised by an audio system of a vehicle in which the navigation device 100 is installed. Furthermore, the navigation device 100 may comprise a microphone (not shown) for receiving speech information from the user.

In operation the positioning unit 101 receives positioning information via the antenna 102 from for example a satellite 107 of a global positioning system like GPS or Galileo. Furthermore, the positioning unit 101 may be coupled to components of a vehicle in which the navigation device 100 is installed, for example to a tachometer or a steering angle sensor. Based on the received information the positioning unit 101 provides a global position information of the navigation device 100 to the processing unit 103. The processing unit 103 may comprise or may have access to maps and may be adapted to calculate a route to a user-defined destination from a user-defined starting point or from a current position determined by the positioning unit 101. The processing unit 103 may further be adapted to display a map and a calculated route together with a current position of the navigation device 100 on the display 104. Furthermore, the processing unit may be adapted to determine driving instructions for guiding the user along the calculated route. The driving instructions may comprise acoustic or visual information indicating next manoeuvres to be done by the user for following the calculated route. The driving instructions may be displayed on the display 104 and may be additionally output as speech information via the loudspeaker 106.

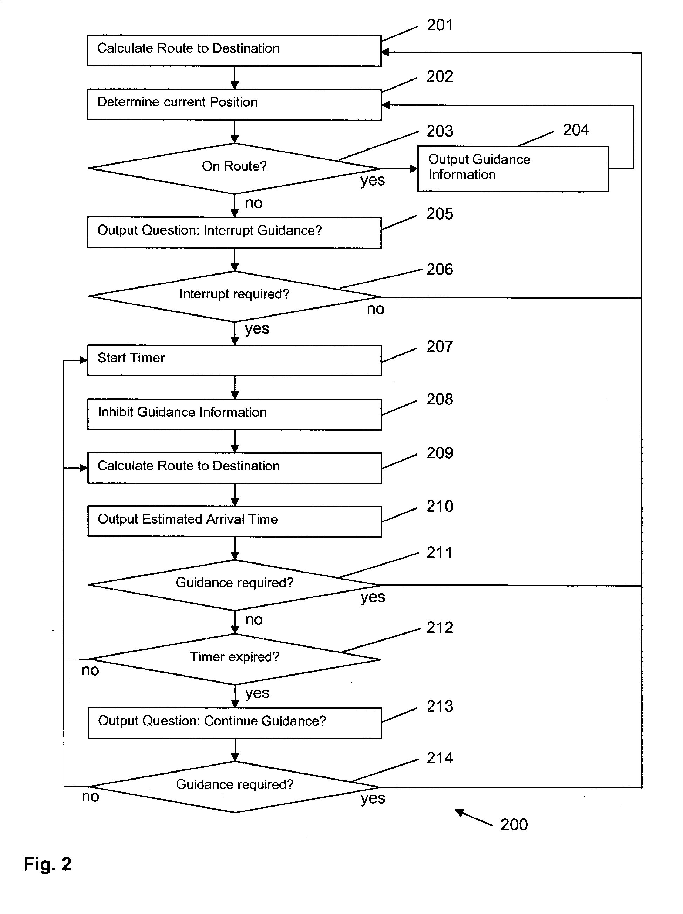

Operation of the navigation device 100 will now be described in more detail with reference to Fig. 2.

Fig. 2 shows a flow chart 200 comprising method steps 201-214 performed by the navigation device 100. After the user has entered a destination via a touchscreen of the display 104 or the key pad 105 or via speech received by the microphone of the navigation device 100, in step 201 a route from the current position to the destination is calculated. In step 202 the current position of the navigation device 100 is determined and in step 203 it is determined based on the current position if the navigation device 100 is still on the calculated route. If the navigation device 100 is still on the route, in step 204 guidance information is output to the user if necessary and the method is continued in step 202.

If in step 203 it is determined that the navigation device 100 is not on the calculated route anymore, which means that the user has left the calculated route, a question is output to the user asking if the user wants to interrupt the guidance (step 205). The user may answer this question by activating corresponding controls on the key pad 105 or the touch-sensitive surface of the display 104 or by speech input. If the user does not give any answer within a predetermined answering time of a few seconds, for example 5 seconds, it may be assumed that the user wishes to interrupt the guidance. Therefore, depending on the reaction of the user (step 206), the method may be continued in step 201 with recalculating a route to the destination if the user does not want to interrupt the guidance, or the method may be continued in step 207 if the user wants to interrupt the guidance.

In step 207 a timer is started. The timer may be realized in the processing unit 103 and may be adapted to determine a predetermined time period after the timer has been started. The predetermined time period may be configurable by the user during a setup procedure of the navigation device 100 or at any other appropriate point in time. Next, in step 208, the currently output guidance information on the map of the display 104 is removed. Furthermore, any output of guidance information is inhibited. This may especially relate to an acoustic output of guidance information. In step 209 as the user has left the calculated route and the calculated route is therefore not valid anymore, a route to the destination is recalculated. Based on the recalculated route to the destination an estimated arrival time at the destination is calculated and output on the display 104 in step 210. In step 211 it is determined if the user has requested to switch on an output guidance information, which means that the user wants to terminate the interruption or inhibition of the output of guidance information. The user may enter this request by activating a corresponding control on the key pad 105 or by a speech input. If such a request to resume the output of guidance information is received in step 211, the method is continued in step 201 where a route to the destination is recalculated. Else, the method is continued in step 212. In step 212 the processing unit 203 checks if the timer started in step 207 has expired, which means that the predetermined time period is over. If the timer has not expired, the method is continued in step 209. Else, in step 213 a question is output to the user asking if the route guidance should be resumed. This question may be answered by the user by activating corresponding controls of the key pad 105 or the touch-sensitive surface of the display 104 or by answering the question via speech. If the user does not answer the question within a predetermined answering time period of a few seconds, for example 5 seconds, the processing unit 103 assumes that the user wishes to resume the route guidance. Depending on the answer or the assumed answer from the user (step 214) the method is continued in step 201 in which the route to the destination is recalculated and guidance information is output if the user wishes to resume the route guidance, or the method is continued in step 207 in which the timer is restarted and no route guidance information is output if the user decided that a route guidance is still not desired.

While exemplary embodiments have been described above, various modifications may be implemented in other embodiments. For example, the method may be performed by a hand-held mobile device outside a vehicle for guiding a user who is walking or hiking or driving a bicycle. Furthermore, the positioning unit 101 may determine a current position of the navigation device 100 based on other information than satellite-based information, for example based on information from a mobile telecommunication network.

Finally, it is to be understood that all the embodiments described above are considered to be comprised by the present invention as it is defined by the appended claims. As already emphasized, the above-described embodiments serve only as illustrative examples, and the scope of the present application is not limited to these embodiments, but it is intended to be limited only by the appended claims and equivalents thereof.

## Claims

1. A method for guiding a user of a navigation device on a calculated route to a destination, wherein guidance information is output to the user to guide the user along the calculated route, the method comprising the steps of:
- determining (203), based on a current position of the navigation device (100), if the user has left the calculated route,
- if the user has left the calculated route, asking (205) the user whether a guidance by the navigation device (100) should be interrupted or not, and
- inhibiting (208) an output of guidance information to the user for a predetermined time period if the user confirms that the guidance by the navigation device (100) should be interrupted,
**characterized by**
- recalculating (209) a route to the destination during the predetermined time period during which the output of guidance information to the user is inhibited, and
- displaying (210) an estimated arrival time at the destination on a display (104) of the navigation device (100) based on the recalculated route.

2. The method according to claim 1, further comprising the steps of:
- determining (212) if the predetermined time period has expired,
- if the predetermined time period has expired, asking (213) the user whether the guidance by the navigation device (100) should be continued or not, and
- inhibiting (208) an output of guidance information to the user for the predetermined time period again if the user confirms that the guidance by the navigation device (100) should not be continued.

3. The method according to claim 2, further comprising, if the user confirms that the guidance by the navigation device should be continued, the steps of:
- calculating (201) a route to the destination, and
- outputting (204) guidance information for guiding the user along the calculated route.

4. The method according to claim 2 or 3, wherein the step of asking (213) the user whether the guidance by the navigation device (100) should be continued or not, comprises:
- outputting a question to the user asking whether the guidance by the navigation device should be continued or not,
- waiting for an answer from the user for a predetermined answering time period, and
- determining that the guidance by the navigation device should be continued if no answer is received within the answering time period.

5. The method according to any one of the preceding claims, further comprising, if the user confirms that the guidance by the navigation device should not be interrupted, the steps of:
- calculating a route to the destination (201), and
- outputting (204) guidance information for guiding the user along the calculated route.

6. The method according to any one of the preceding claims, wherein the step of asking (205) the user whether the guidance by the navigation device (100) should be interrupted or not, comprises:
- outputting a question to the user asking whether the guidance by the navigation device should be interrupted or not,
- waiting for an answer from the user for a predetermined answering time period, and
- determining that the guidance by the navigation device should be interrupted if no answer is received within the answering time period.

7. The method according to any one of the preceding claims, wherein asking (205, 213) the user comprises
- outputting visual and/ or acoustic information, and
- receiving haptic and/or acoustic information.

8. The method according to any one of the preceding claims, further comprising setting of the predetermined time period by the user.

9. The method according to any one of the preceding claims, wherein inhibiting (209) the output of guidance information to the user comprises inhibiting displaying of the calculated route to the destination on a map and inhibiting an output of driving instructions.

10. The method according to any one of the preceding claims, further comprising the steps of:
- receiving (211) a command from the user to terminate inhibiting the output of guidance information,
- calculating (201) a route to the destination, and
- outputting (204) guidance information for guiding the user along the calculated route.

11. The method according to any one of the preceding claims, wherein asking (205) the user whether a guidance by the navigation device (100) should be interrupted or not comprises asking the user whether the route ahead is blocked or asking the user whether leaving the calculated route is intended.

12. A navigation device comprising:
- a positioning unit (101) adapted to determine a current position of the navigation device (100),
- a user interface (104-106) adapted to output information to a user of the navigation device (100) and to receive information from the user, and
- a processing unit (103) adapted
to calculate (201) a route to a destination,
to generate and output (204) guidance information for guiding the user along the calculated route,
to determine (203), based on the current position of the navigation device (100), if the user is leaving the calculated route, and
if the user is leaving the calculated route, to ask (205) the user whether a guidance by the navigation device (100) should be interrupted or not, and
if the user confirms that the guidance by the navigation device (100) should be interrupted, to inhibit (208) an output of guidance information to the user for a predetermined time period
**characterized in that** the processing unit (103) is furthermore adapted
- to recalculate (209) a route to the destination during the predetermined time period during which the output of guidance information to the user is inhibited, and
- to display (210) an estimated arrival time at the destination on the user interface (104) based on the recalculated route.

13. The navigation device according to claim 12, wherein the navigation device (100) is adapted to perform the method according to any one of claims 2-11.

14. The navigation device according to claim 12 or 13, wherein the navigation device (100) comprises a mobile personal navigation device or a navigation device of a vehicle.

## Patentansprüche

1. Verfahren zum Führen eines Benutzers einer Navigationsvorrichtung auf einer berechneten Route zu einem Zielort, wobei Führungsinformationen an den Benutzer ausgegeben werden, um den Benutzer auf der berechneten Route zu führen, wobei das Verfahren folgende Schritte umfasst:
- Bestimmen (203) auf Grundlage einer aktuellen Position der Navigationsvorrichtung (100), ob der Benutzer die berechnete Route verlassen hat,
- wenn der Benutzer die berechnete Route verlassen hat, Fragen (205) des Benutzers, ob eine Führung durch die Navigationsvorrichtung (100) unterbrochen werden soll oder nicht, und
- Unterdrücken (208) einer Ausgabe von Führungsinformationen an den Benutzer für eine im Voraus festgelegte Zeitperiode, wenn der Benutzer bestätigt, dass die Führung durch die Navigationsvorrichtung (100) unterbrochen werden soll,
**gekennzeichnet durch**
- Neuberechnen (209) einer Route zum Zielort während der im Voraus festgelegten Zeitperiode, während der die Ausgabe von Führungsinformationen an den Benutzer unterdrückt wird, und
- Anzeigen (210) einer geschätzten Ankunftszeit am Zielort auf einer Anzeige (104) der Navigationsvorrichtung (100) auf Grundlage der neu berechneten Route.

2. Verfahren nach Anspruch 1, ferner folgende Schritte umfassend:
- Bestimmen (212), ob die im Voraus festgelegte Zeitperiode abgelaufen ist,
- wenn die im Voraus festgelegte Zeitperiode abgelaufen ist, Fragen (213) des Benutzers, ob die Führung durch die Navigationsvorrichtung (100) fortgesetzt werden soll oder nicht, und
- erneutes Unterdrücken (208) einer Ausgabe von Führungsinformationen an den Benutzer für eine im Voraus festgelegte Zeitperiode, wenn der Benutzer bestätigt, dass die Führung durch die Navigationsvorrichtung (100) nicht fortgesetzt werden soll.

3. Verfahren nach Anspruch 2, ferner folgende Schritte umfassend, wenn der Benutzer bestätigt, dass die Führung durch die Navigationsvorrichtung fortgesetzt werden soll:
- Berechnen (201) einer Route zum Zielort, und
- Ausgeben (204) von Führungsinformationen, um den Benutzer auf der berechneten Route zu führen.

4. Verfahren nach Anspruch 2 oder 3, wobei der Schritt des Fragens (213) des Benutzers, ob die Führung durch die Navigationsvorrichtung (100) fortgesetzt werden soll oder nicht, Folgendes umfasst:
- Ausgeben einer Frage an den Benutzer, um zu fragen, ob die Führung durch die Navigationsvorrichtung fortgesetzt werden soll oder nicht,
- Warten auf eine Antwort vom Benutzer für eine im Voraus festgelegte Antwortzeitperiode, und
- Bestimmen, dass die Führung durch die Navigationsvorrichtung fortgesetzt werden soll, wenn keine Antwort innerhalb der Antwortzeitperiode empfangen wird.

5. Verfahren nach einem der vorangehenden Ansprüche, ferner folgende Schritte umfassend, wenn der Benutzer bestätigt, dass die Führung durch die Navigationsvorrichtung nicht unterbrochen werden soll:
- Berechnen (201) einer Route zum Zielort, und
- Ausgeben (204) von Führungsinformationen, um den Benutzer auf der berechneten Route zu führen.

6. Verfahren nach einem der vorangehenden Ansprüche, wobei der Schritt des Fragens (205) des Benutzers, ob die Führung durch die Navigationsvorrichtung (100) unterbrochen werden soll oder nicht, Folgendes umfasst:
- Ausgeben einer Frage an den Benutzer, um zu fragen, ob die Führung durch die Navigationsvorrichtung unterbrochen werden soll oder nicht,
- Warten auf eine Antwort vom Benutzer für eine im Voraus festgelegte Antwortzeitperiode, und
- Bestimmen, dass die Führung durch die Navigationsvorrichtung unterbrochen werden soll, wenn keine Antwort innerhalb der Antwortzeitperiode empfangen wird.

7. Verfahren nach einem der vorangehenden Ansprüche, wobei das Fragen (205, 213) des Benutzers Folgendes umfasst:
- Ausgeben optischer und/oder akustischer Informationen, und
- Empfangen haptischer und/oder akustischer Informationen.

8. Verfahren nach einem der vorangehenden Ansprüche, ferner umfassend Einstellen der im Voraus festgelegten Zeitperiode durch den Benutzer.

9. Verfahren nach einem der vorangehenden Ansprüche, wobei das Unterdrücken (209) der Ausgabe von Führungsinformationen an den Benutzer Unterdrücken des Anzeigens der berechneten Route zum Zielort auf einer Karte und Unterdrücken einer Ausgabe von Fahranweisungen umfasst.

10. Verfahren nach einem der vorangehenden Ansprüche, ferner folgende Schritte umfassend:
- Empfangen (211) eines Befehls vom Benutzer, um das Unterdrücken der Ausgabe von Führungsinformationen zu beenden,
- Berechnen (201) einer Route zum Zielort, und
- Ausgeben (204) von Führungsinformationen, um den Benutzer auf der berechneten Route zu führen.

11. Verfahren nach einem der vorangehenden Ansprüche, wobei das Fragen (205) des Benutzers, ob die Führung durch die Navigationsvorrichtung (100) unterbrochen werden soll oder nicht, Fragen des Benutzers, ob die vor ihm liegende Route blockiert ist, oder Fragen des Benutzers, ob ein Verlassen der berechneten Route beabsichtigt wird, umfasst.

12. Navigationsvorrichtung, umfassend:
- eine Positionierungseinheit (101), die dazu ausgebildet ist, eine aktuelle Position der Navigationsvorrichtung (100) zu bestimmen,
- eine Benutzerschnittstelle (104-106), die dazu ausgebildet ist, Informationen an einen Benutzer der Navigationsvorrichtung (100) auszugeben und Informationen vom Benutzer zu empfangen, und
- eine Verarbeitungseinheit (103), die ausgebildet ist zum
Berechnen (201) einer Route zu einem Zielort, und Generieren und Ausgeben (204) von Führungsinformationen, um den Benutzer auf der berechneten Route zu führen, Bestimmen (203) auf Grundlage einer aktuellen Position der Navigationsvorrichtung (100), ob der Benutzer die berechnete Route verlassen hat, und
wenn der Benutzer die berechnete Route verlassen hat, Fragen (205) des Benutzers, ob eine Führung durch die Navigationsvorrichtung (100) unterbrochen werden soll oder nicht, und
Unterdrücken (208) einer Ausgabe von Führungsinformationen an den Benutzer für eine im Voraus festgelegte Zeitperiode, wenn der Benutzer bestätigt, dass die Führung durch die Navigationsvorrichtung (100) unterbrochen werden soll,
**dadurch gekennzeichnet, dass** die Verarbeitungseinheit (103) ferner ausgebildet ist zum
- Neuberechnen (209) einer Route zum Zielort während der im Voraus festgelegten Zeitperiode, während der die Ausgabe von Führungsinformationen an den Benutzer unterdrückt wird, und
- Anzeigen (210) einer geschätzten Ankunftszeit am Zielort auf der Benutzeroberfläche (104) auf Grundlage der neu berechneten Route.

13. Navigationsvorrichtung nach Anspruch 12, wobei die Navigationsvorrichtung (100) zum Durchführen des Verfahrens nach einem der Ansprüche 2-11 ausgebildet ist.

14. Navigationsvorrichtung nach Anspruch 12 oder 13, wobei die Navigationsvorrichtung (100) eine mobile persönliche Navigationsvorrichtung oder eine Navigationsvorrichtung eines Fahrzeugs umfasst.

## Revendications

1. Procédé de guidage d'un utilisateur d'un dispositif de navigation sur un itinéraire calculé jusqu'à une destination, dans lequel les informations de guidage sont soumises à l'utilisateur pour guider l'utilisateur le long de l'itinéraire calculé, ce procédé comprenant les étapes suivantes :
- déterminer (203), en fonction d'une position en cours du dispositif de navigation (100), si l'utilisateur a quitté l'itinéraire calculé,
- si l'utilisateur a quitté l'itinéraire calculé, demander (205) à l'utilisateur si un guidage par le dispositif de navigation (100) doit être interrompu ou non, et
- inhiber (208) une soumission des informations de guidage à l'utilisateur pendant une durée prédéterminée si l'utilisateur confirme que le guidage par le dispositif de navigation (100) doit être interrompu,
**caractérisé par**
- le recalcul (209) d'un itinéraire jusqu'à la destination pendant la durée prédéterminée au cours de laquelle la soumission des informations de guidage destinées à l'utilisateur est inhibée, et
- l'affichage (210) d'une durée estimée d'arrivée à la destination sur un écran (104) du dispositif de navigation (100), en fonction de l'itinéraire recalculé.

2. Procédé selon la revendication 1, comprenant en outre les étapes suivantes :
- déterminer (212) si la durée prédéterminée s'est écoulée,
- si la durée prédéterminée s'est écoulée, demander (213) à l'utilisateur si le guidage par le dispositif de navigation (100) doit être prolongé ou non, et
- inhiber encore (208) une soumission des informations de guidage à l'utilisateur pendant la durée prédéterminée, si l'utilisateur confirme que le guidage par le dispositif de navigation (100) ne doit pas être prolongé.

3. Procédé selon la revendication 2, comprenant en outre, si l'utilisateur confirme que le guidage par le dispositif de navigation doit être prolongé, les étapes suivantes :
- calcul (201) d'un itinéraire jusqu'à la destination, et
- soumission (204) d'informations de guidage pour guider l'utilisateur le long de l'itinéraire calculé.

4. Procédé selon la revendication 2 ou 3, dans lequel l'étape de demande (213) à l'utilisateur si le guidage par le dispositif de navigation (100) doit être prolongé ou non comprend :
- la soumission d'une question à l'utilisateur, lui demandant si le guidage par le dispositif de navigation doit être prolongé ou non,
- l'attente d'une réponse de l'utilisateur pendant une durée prédéterminée de réponse, et
- la détermination si le guidage par le dispositif de navigation doit être prolongé si aucune réponse n'est reçue pendant la durée de réponse.

5. Procédé selon l'une quelconque des revendications précédentes, comprenant en outre, si l'utilisateur confirme que le guidage par le dispositif de navigation ne doit pas être interrompu, les étapes suivantes :
- calculer un itinéraire jusqu'à la destination (201), et
- soumettre (204) des informations de guidage permettant de guider l'utilisateur le long de l'itinéraire calculé.

6. Procédé selon l'une quelconque des revendications précédentes, dans lequel l'étape de demande (205) à l'utilisateur si le guidage par le dispositif de navigation (100) doit être interrompu ou non comprend :
- la soumission d'une question à l'utilisateur, demandant si le guidage par le dispositif de navigation doit être interrompu ou non,
- l'attente d'une réponse de l'utilisateur pendant une durée prédéterminée de réponse, et
- la détermination que le dispositif de navigation doit être interrompu si aucune réponse n'est reçue pendant la durée de réponse.

7. Procédé selon l'une quelconque des revendications précédentes, dans lequel la demande (205, 213) à l'utilisateur comprend
- la soumission d'informations visuelles et/ou sonores, et
- la réception d'informations tactiles et/ou sonores.

8. Procédé selon l'une quelconque des revendications précédentes, comprenant en outre le réglage de la durée prédéterminée par l'utilisateur.

9. Procédé selon l'une quelconque des revendications précédentes, dans lequel l'inhibition (209) de la soumission des informations de guidage à l'utilisateur comprend l'inhibition de l'affichage de l'itinéraire calculé jusqu'à la destination sur une carte et l'inhibition d'une soumission des instructions de conduite.

10. Procédé selon l'une quelconque des revendications précédentes, comprenant en outre les étapes suivantes :
- réception (211) d'une commande provenant de l'utilisateur, afin de terminer l'inhibition de la soumission des informations de guidage,
- calcul (201) d'un itinéraire jusqu'à la destination, et
- soumission (204) d'informations de guidage pour guider l'utilisateur le long de l'itinéraire calculé.

11. Procédé selon l'une quelconque des revendications précédentes, dans lequel la demande (205) à l'utilisateur si un guidage par le dispositif de navigation (100) doit être interrompu ou non comprend la demande à l'utilisateur si l'itinéraire en avant est bloqué ou la demande à l'utilisateur si le fait de quitter l'itinéraire calculé est volontaire.

12. Dispositif de navigation comprenant :
- une unité (101) de positionnement adaptée pour déterminer une position en cours du dispositif de navigation (100),
- une interface d'utilisateur (104-106) conçue pour soumettre les informations à un utilisateur du dispositif de navigation (100) et pour recevoir des informations provenant de l'utilisateur, et
- une unité (103) de traitement conçue
pour calculer (201) un itinéraire jusqu'à une destination,
pour produire et pour soumettre (204) des informations de guidage permettant de guider l'utilisateur le long de l'itinéraire calculé,
pour déterminer (203), en fonction de la position en cours du dispositif de navigation (100), si l'utilisateur quitte l'itinéraire calculé, et
si l'utilisateur quitte l'itinéraire calculé, demander (205) à l'utilisateur si un guidage par le dispositif de navigation (100) doit être interrompu ou non, et
si l'utilisateur confirme que le guidage par le dispositif de navigation (100) doit être interrompu, pour inhiber (208) une soumission d'informations de guidage à l'utilisateur pendant une durée prédéterminée
**caractérisé en ce que** l'unité (103) de traitement est en outre conçue
- pour recalculer (209) un itinéraire jusqu'à la destination pendant la durée prédéterminée au cours de laquelle la soumission des informations de guidage à l'utilisateur est inhibée, et
- pour afficher (210) une heure estimée d'arrivée à destination sur l'interface (104) d'utilisateur, en fonction de l'itinéraire recalculé.

13. Dispositif de navigation selon la revendication 12, dans lequel le dispositif de navigation (100) est conçu pour suivre le procédé selon l'une quelconque des revendications 2 à 11.

14. Dispositif de navigation selon la revendication 12 ou 13, dans lequel le dispositif de navigation (100) comprend un dispositif mobile personnel de navigation ou un dispositif de navigation d'un véhicule.
